# EUROPEAN PATENT APPLICATION

(11) **EP 3 159 980 A1**
(43) Date of publication of application: **26.04.2017**
(21) Application number: 15190828.2
(22) Date of filing: 21.10.2015
(51) Int. Cl.: H01R 39/42

(54) **BRUSH LIFTER FOR AN ELECTRIC MACHINE**

(71) Applicant: General Electric Technology GmbH, 5400 Baden (CH)
(72) Inventor: Haldemann, Johann, 5242 Birr (CH)
(74) Representative: General Electric Technology GmbH

(57) **Abstract**

The present disclosure relates to brushes to transfer electric direct current from a current source to a rotor of an electric machine to electrically excite the rotor. It is an object of the invention to reduce the wear of brushes in electric machines. To this end a brush lifter for an electric machine with a spring to exert a pressure to a brush in the direction of a rotor is disclosed. The brush lifter has an inflatable gas bag fed via a feed with gas by a compressor, which is controlled by a processor, to lift off or drop the brush from the rotor via a hanger, whereas the brush is lifted when the gas bag is inflated and exerts a force to lift the hanger and the connected brush.

## Description

### TECHNICAL FIELD

The present disclosure relates to brushes to transfer electric direct current from a current source to a rotor of an electric machine to electrically excite the rotor. In particular, the disclosure relates to a lifter of such a brush to press, lift off, and drop the brush against a slip ring of the rotor.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

### BACKGROUND

Synchronous machines operate at different rotor current levels depending on the load situation. Machine arrangements with static excitation use two slip rings to feed the direct current (DC) into the rotor winding. This rotor current generated outside the machine is transferred by a set of brushes onto the slip ring or slip rings. The brushes operate best with a certain minimum of current per contact area within a rated current range. At lower rotor currents the brushes are de-loaded so that the rate of wear is increased. The wear of the brushes in big machines is an important parameter. It is advantageous to reduce the wear of the brushes.

### SUMMARY

It is an object of the invention to reduce the wear of brushes in electric machines. This object is solved with the features of a brush lifter according to the independent claim.

Further examples of the invention are described in the dependent claims.

In an example of the invention a spring is arranged between the brush and a container of the gas bag to ensure a simple structure of the brush lifter. The container can be open at the upper side to allow the hanger to contact the gas bag. The gas bag exerts a pressure to the hanger at this open side of the container.

In a further example of the invention the brush is slidable connected to a fixed frame, and the hanger is connected to the fixed frame. The brush can be lift off and dropped in relation to the frame which frame is arranged around the brush.

In a further example of the invention the processor monitors the rotor current which is the current to be transferred from all applied brushes to the slip ring. The processor triggers the brush lifter to lift off or drop the brush when the rotor current exceeds specific threshold values. The threshold values are determined on basis of the number of applied brushes and especially the rated current flowing in the individual brushes. The rotor current is distributed evenly over the number of applied brushes connected to the rotor slip ring. The individual brush should be operated permanently between approximately 70% and 100% of the rated current. In case the rotor current is to be dropped below a threshold value the processor signals the compressor to feed gas to the gas bags to lift off a specific number of brushes from the slip ring. In the contrary case when the rotor current is to be increased above a threshold value the processor signals the compressor to detract gas from the gas bags to cause a drop of a specific number of brushes to connect to the slip ring.

### BRIEF DESCRIPTION OF THE DRAWINGS

Further characteristics and advantages will be more apparent from the description of a preferred but non-exclusive embodiment of the brush lifter, illustrated by way of non-limiting example in the accompanying drawings, in which:

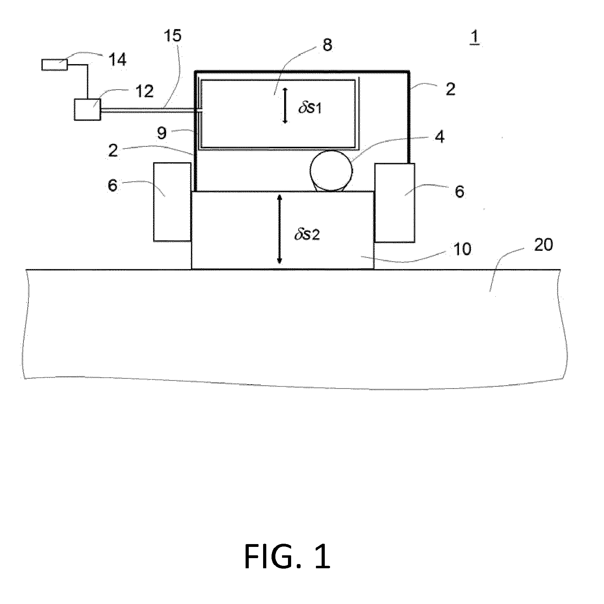

- Fig. 1: shows a schematic side view of a cut part of a rotor slip ring with a brush resting at the slip ring, the brush slidable connected to a frame, a spring between the brush and a container housing a gas bag, the spring to exert a pressure to a brush in the direction of the slip ring, and an inflatable gas bag to lift off the brush from the slip ring via a hanger at the gas bag.

### DETAILED DESCRIPTION OF EXEMPLARY EMBODIMENTS

With reference to the figure, this shows a brush lifter with a brush at a slip ring according to an example of the invention, wherein like reference numerals designate identical or corresponding parts throughout the several views.

Fig. 1 shows a schematic side view of a brush lifter 1 with a brush 10 for an electric machine. In particular, the use of the brush lifter 1 in a synchronous condenser proves to be of specific interest due to high rotor current variations. Further shown is a schematic side view of a cut part of a rotor slip ring 20 or slip ring 20 below. The slip ring 20 is commonly mounted at the end of the rotor core to receive excitation current and transfer to the rotor windings to magnetize the rotor core. The slip ring 20 is massive and fabricated from a conductive material. On the slip ring 20 a brush 10 is arranged to transfer the excitation current to the slip ring 20. The brush 10 is commonly made in form of a brick made of carbon electrically connected to a current source. The brush 10 is housed in a frame 6 around the brush 10. Here, the frame 6 is illustrated by only two faces left and right from the brush 10, commonly the frame 6 encloses substantial parts of the brush 10. The brush 10 is slidable connected to the frame 6, the brush 10 is movable up and down along the fixed frame 6 in the perspective of Fig. 1. The brush 10 slides along the frame 6 with slide faces and/or vertical cavities in the brush 10 in which parts of the frame 6 engage to slide in the cavities. A spring 4 is connected to the brush 10 at the upper side distant from the slip ring 20. The spring 4 exerts a pressure to the brush 10 sufficient to press the brush 10 against the slip ring 20 with an appropriate pressure. In the shown position the brush 10 touches the slip ring 20 and transfers a current from a current source to the slip ring 20. Above the spring 4 in this example a container 9 is arranged which has an opening at the upper side. Here, the complete upper face of the container 9 is open. Inside the container 9 an inflatable gas bag 8 is arranged which contains a variable volume of gas, e.g. air. The gas bag 8 is fed with gas by a compressor 12 with gas supply via a feed 15 which connects the gas supply with the gas bag 8. The compressor 12 is electrically connected to a processor 14 which controls the compressor 12. The processor 14 can be integrated in the machine control or alternatively establish a separate control system of the brush lifter 1. A hanger 2 is arranged from the brush 10 around the container 9 to the frame 6, as can be seen in Fig 1 in a schematic manner. The hanger 2 can be fabricated from a steel cable or a wire rope for example. The hanger 2 is fixed to the movable brush 10, butts against the gas bag 8 when inflated, and is at the other side fixed to the stationary frame 6. The arrangement of these three parts forms a kind of pulley with the brush 10 as a load. The hanger 2 can also be fixed to a different stationary part than the frame 6 of the brush 10. From the position in Fig. 1 with the brush 10 in touch with the slip ring 20 the processor 14 sends a signal to the compressor 12 with gas supply. This signal triggers the compressor 12 to transfer gas via the feed 15 into the gas bag 8. As a consequence, the gas bag 8 is inflated and expands its volume within the container 9. The vertically directed distance caused by the volume change is referred to here as gas bag distance *δs1*. The gas bag 8 adjoins the hanger 2 at the upper part and presses against the hanger 2 leading to an upwardly directed shift of the hanger 2. The spring force of the spring 4 between the moving brush 10 and the stationary container 9 is enhanced then. The spring force is however not sufficient to block the lift off of the brush 10. The spring 4 stores an increasing potential energy with the lift off of the brush 10. As the hanger 2 is fixed at the right side to the stationary frame 6 in the perspective of Fig. 1 and at the left side connected to the movable brush 10, the brush 10 is lifted. The distance with which the brush 10 is lifted and moved upwards depends on the gas feed to the gas bag 8 controlled by the processor 14. The gas supply in dependency from the distance *δs1* which the hanger 2 moves vertically is calibrated in the processor 14 of the brush lifter 1. The vertically directed distance is referred to here as brush distance *δs2.* The dependency of the two distances *δs1 and δs2* is calibrated and stored in a table of the processor 14 to enable an appropriate removal of the brush 10 from the slip ring 20. The three quantities gas supply, distance *δs1* and distance *δs2* are precisely defined in the processor 14 of the brush lifter 1. In the lifted position, when the brush 10 has no touch to the slip ring 20, no current is transferred from the brush 10 to the slip ring 20. When lower rotor current levels are required in the electric machine not all brushes 10 arranged at the slip ring 20 might be necessary. Lifting a brush 10 as described increases the current in the brushes 10 remaining in touch with the slip ring 20. As was found low currents in the brush 10 lead to a higher wear of the brush 10 than higher currents. Therefore, with properly controlled brush lifters 1 applied in an electric machine the wear of the brushes 10 can be reduced. When the electric machine operates in a mode with lower brush currents required falling below a threshold value, the processor 14 steers a number of brush lifters 1 to lift off a proper amount of brushes 10 as described. Then, one or more brushes 10 are removed from the slip ring 20 by means of the brush lifters 1 to enhance the current in the other brushes 10. When again higher rotor currents are required in the electric machine exceeding a threshold value which cannot be transferred only by the residual brushes 10 laying against the slip ring 20 of the rotor the processor 14 triggers a specific number of brush lifters 1 to deflate the gas bags 8 and drop the specific number of brushes 10 to get in touch with the slip ring 20. The processor 14 triggers the compressor 12 to suck gas from the inflatable gas bag 8. Accordingly, the volume of the gas bag 8 diminishes with a specified extend. The volume decrease leads to a controlled gas bag distance *δs1,* the way the gas bag 8 covers in the vertical direction downwards. With lower pressure from the gas bag 8 and the stored spring force from the spring 4 exceeding the force of the gas bag 8 to the hanger 2 the brush 10 is lowered or dropped. The spring 4 is released and the spring force is reduced accordingly. The brush lifter 1 performs these steps in a controlled manner to achieve a configuration according to Fig. 1 again with the brush 10 smoothly touching the slip ring 20 of the rotor. The current transfer from the brush 10 to the slip ring 20 is ensured again in this configuration.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents.

### REFERENCE NUMBERS

- 1: brush lifter
- 2: hanger
- 4: spring
- 6: frame
- 8: gas bag
- 9: gas bag container or container
- 10: brush
- 12: compressor
- 14: processor
- 15: feed
- 20: slip ring or rotor slip ring
- *δs1*: gas bag distance
- *δs2*: brush distance

## Claims

1. A brush lifter (1) for an electric machine with a spring (4) to exert a pressure to a brush (10) in the direction of a rotor (20), and an inflatable gas bag (8) fed via a feed (15) with gas by a compressor (12), which is controlled by a processor (14), to lift off or drop the brush (10) from the rotor (20) via a hanger (2), whereas the brush (10) is lifted when the gas bag (8) is inflated and exerts a force to lift the hanger (2) and the connected brush (10).

2. The brush lifter (1) according to claim 1, **characterized in that** the spring (4) is arranged between the brush (10) and a container (9) housing the gas bag (8).

3. The brush lifter (1) according to claim 1, **characterized in that** the gas bag (8) is arranged in a container (9) which is open at one side to allow the gas bag (8) to exert a force to the hanger (2).

4. The brush lifter (1) according to claim 1, **characterized in that** the brush (10) is slidable connected to a fixed frame (6), and the hanger (2) is connected to the fixed frame (6).

5. The brush lifter (1) according to claim 1, **characterized in that** the processor (14) monitors the rotor current and triggers the brush lifter (1) to lift off or drop the brush (10) when the rotor current exceeds specific threshold values.

6. The brush lifter (1) according to claim 5, **characterized in that** the processor (14) is electrically connected with a set of brush lifters (1) to lift off or drop a corresponding set of brushes (10).
